# EUROPÄISCHE PATENTSCHRIFT

(11) **EP 3 166 312 B1**
(45) Veröffentlichungstag und Bekanntmachung des Hinweises auf die Patenterteilung: **30.12.2020**
(21) Anmeldenummer: 15193508.7
(22) Anmeldetag: 06.11.2015
(51) Int. Cl.: H04N 17/00, H04N 5/225, H04N 13/239, H04N 13/246, G02B 27/62

(54) **VORRICHTUNG UND VERFAHREN ZUM JUSTIEREN UND/ODER KALIBRIEREN EINES MULTI-KAMERA MODULS SOWIE VERWENDUNG EINER SOLCHEN VORRICHTUNG**
DEVICE AND METHOD FOR ADJUSTING AND/OR CALIBRATING A MULTI-CAMERA MODULE AND USE OF SUCH A DEVICE
DISPOSITIF ET PROCÉDÉ D'AJUSTAGE ET/OU D'ÉTALONNAGE D'UN MODULE MULTI-CAMÉRA ET UTILISATION D'UN TEL DISPOSITIF

(43) Veröffentlichungstag der Anmeldung: 10.05.2017
(73) Patentinhaber: Trioptics GmbH, 22880 Wedel (DE)
(72) Erfinder: Ruprecht, Aiko, 22605 Hamburg (DE); Stauss, Benjamin, 22559 Hamburg (DE); Spehling, Johannes, 20459 Hamburg (DE)
(74) Vertreter: Seemann & Partner Patentanwälte mbB

(56) Entgegenhaltungen:
- JP-A- 2012 132 739
- US-A1- 2010 141 962
- US-A1- 2012 293 666
- "Lunette autocollimatrice", , 18. Juni 2015 (2015-06-18), XP055272081, Gefunden im Internet: URL:https://fr.wikipedia.org/w/index.php?t itle=Lunette_autocollimatrice&oldid=116110 952 [gefunden am 2016-05-12]

## Beschreibung

Die Erfindung betrifft eine Vorrichtung zum Justieren und/oder Kalibrieren eines Multi-Kamera Moduls mit mehreren Kameras. Ferner betrifft die Erfindung die Verwendung einer solcher Vorrichtung zum Justieren und Kalibrieren eines Multi-Kamera Moduls sowie ein Verfahren zum Justieren und/oder Kalibrieren eines Multi-Kamera Moduls mit mehreren Kameras.

Multi-Kamera Module sind in verschiedenen Konfigurationen bekannt und haben vielfältige Anwendungen. Solche Module umfassen mehrere Kameras, vielfach zwei Kameras, die durch eine Stereobasis voneinander beabstandet sind. Die Kameras des Multi-Kamera Moduls erfassen ein Beobachtungsfeld aus leicht unterschiedlichen Blickrichtungen bzw. -winkeln und erfassen gemeinsam stereoskopische Bilddaten des Beobachtungsfeldes, aus denen 3D-Daten desselben gewonnen werden können.

Multi-Kamera Module kommen beispielsweise in der Medizintechnik (3D-Endoskope), in der Automobiltechnik (Distanz Stereo-Kameras) oder auch im Multimediabereich (3D-Kameras) zum Einsatz.

Einige Multi-Kamera Module umfassen zwei oder mehrere vollständig getrennte Kamera Module. Ebenso ist es bekannt, lediglich die Abbildungsoptiken als getrennte Bauteile auszuführen, wobei die Bildsensoren beispielsweise in einer Baueinheit zusammengefasst sind. Die Bildsensoren können dabei sowohl auf getrennten Bauteilen, beispielsweise getrennten Leiterplatten oder Platinen, angeordnet oder auch auf einem Bauteil, also beispielsweise einer gemeinsamen Leiterplatte, Platine oder Die zusammengefasst sein. Ebenso sind Module bekannt, bei denen die Optiken in einem Bauteil zusammengefasst sind. Solche Systeme werden auch als "Ein-Systeme" bezeichnet. Multi-Kamera Module können außerdem mit Kameras oder Abbildungsoptiken ausgestattet werden, die unterschiedliche Blickwinkel erfassen, also beispielsweise unterschiedliche Brennweiten aufweisen. Bei solchen Modulen ist ein sehr schneller Zoom durch Umschalten von einer Kamera auf die andere möglich. Insgesamt ist ein Trend zu immer kleineren Kamerasystemen mit immer geringerer Stereobasis zu beobachten.

Bei Multi-Kamera Modulen ist es notwendig, die beiden einzelnen Kameras zueinander auszurichten. Diese Notwendigkeit betrifft die Ausrichtung der Bildsensoren und/oder die Ausrichtung der jeweiligen abbildenden Optiken. Es ist möglich, die Kameras mit parallelen optischen Achsen zueinander auszurichten, so dass im Unendlichen liegende Objekte bei allen Kameras auf der gleichen Pixelposition detektiert werden. Ebenso ist es möglich, die Kameras auf ein endlich weit entferntes Objekt zu justieren, so dass dieses Objekt in endlicher Distanz bei allen Kameras auf der gleichen Pixelposition detektiert wird. Die optischen Achsen der Kameras schneiden sich in diesem Fall in endlicher Entfernung.

Zum Ausrichten der Kameras sind Prüfsysteme für Multi-Kamera Module bekannt, bei denen reale Objekte als Teststrukturen (auch vielfach als Testcharts bezeichnet) in verschiedenen endlichen Entfernungen eingesetzt werden, um die Kameras des Multi-Kamera Moduls zueinander zu justieren bzw. zu kalibrieren. Ein solches Testsystem ist beispielsweise aus US 2014/0118503 A1 bekannt. Es werden Teststrukturen in zwei verschiedenen endlichen Entfernungen betrachtet. Die beiden einzelnen Kameras werden in einem iterativen Verfahren zueinander ausgerichtet.

Für eine exakte Ausrichtung der Kameras eines Multi-Kamera Moduls um alle sechs Achsen reicht jedoch eine Endlich-Distanzmessung nicht aus. Es ist eine geeignete Kombination aus einer Endlich- und einer Unendlich-Messung zu wählen, um alle sechs Freiheitsgrade getrennt voneinander ermitteln und die Kameras entsprechend ausrichten zu können.

Für die näherungsweise Unendlich-Messung werden vielfach große Entfernungen zwischen Prüfling und einer Teststruktur verwendet. Der Abstand des Prüflings zur Teststruktur wird also sehr groß im Vergleich zur Brennweite des Prüflings gewählt. Ein solcher Aufbau nimmt jedoch viel Platz in Anspruch.

Die ebenfalls vielfach eingesetzten sequenziellen Messverfahren, bei denen Messungen in unterschiedlichen Entfernungen durchgeführt werden, erfordern eine lange Messzeit, was ebenfalls unerwünscht ist. Ein Prüfsystem, bei dem sequenziell, d.h. zeitlich nacheinander, einzelne Messungen mit unterschiedlichen Messentfernungen vorgenommen werden, ist beispielsweise aus JP 05 589 823 B2 bekannt. Bei der aus diesem Dokument bekannten Vorrichtung wird mithilfe eines Kollimators eine im Unendlichen liegende Teststruktur simuliert. An einem zweiten separaten Messplatz wird eine Teststruktur in einer endlichen Entfernung bereitgestellt. Der Prüfling wird auf einem Rotationstisch platziert und abhängig von der Position des Tisches entweder einer Endlich- oder einer Unendlich-Messung unterzogen.

US 2010/0141962 A1 offenbart eine Testvorrichtung zum Testen eines optischen Geräts aus unterschiedlichen Objektentfernungen. Die Testvorrichtung umfasst wenigstens einen Reflektor, wenigstens ein erstes Zielmodul mit einer ersten Teststruktur, wenigstens ein zweites Zielmodul mit einer zweiten Teststruktur und wenigstens ein drittes Zielmodul mit einer quasi parallelen dritten Teststruktur.

Es ist eine Aufgabe der Erfindung, eine Vorrichtung sowie ein Verfahren zum Justieren und/oder Kalibrieren eines Multi-Kamera Moduls sowie die Verwendung einer solchen Vorrichtung anzugeben, wobei die Justage und/oder Kalibration des Multi-Kamera Moduls präzise und effizient sein soll.

Die Aufgabe wird gelöst durch eine Vorrichtung zum Justieren und/oder Kalibrieren eines Multi-Kamera Moduls mit mehreren Kameras, wobei die Vorrichtung umfasst:
- eine optische Anordnung, die dazu eingerichtet ist, erste virtuelle Teststrukturen in unendlicher Entfernung und zweite virtuelle Teststrukturen in endlicher Entfernung gleichzeitig zu erzeugen, wobei die optische Anordnung einen einzigen Kollimator umfasst, wobei
   a) der Kollimator ein bifokaler Kollimator ist, der eine einzige Strichplatte als erste virtuelle Teststrukturen in unendlicher Entfernung abbildet und die Strichplatte als zweite virtuelle Teststrukturen in endlicher Entfernung abbildet
      oder
   b) eine erste Strichplatte und eine zweite Strichplatte in unterschiedlichen Entfernungen zu einem Fokus des Kollimators angeordnet sind, so dass die ersten virtuellen Teststrukturen und die zweiten virtuellen Teststrukturen durch den Kollimator erzeugbar sind,
      und wobei die ersten und die zweiten virtuellen Teststrukturen gleichzeitig mit den Kameras des Multi-Kamera Moduls erfassbar sind,
- eine Verarbeitungseinheit zum Auswerten einer mit dem Multi-Kamera Modul erfassten Aufnahme der ersten und zweiten virtuellen Teststrukturen, wobei die Verarbeitungseinheit dazu eingerichtet ist, eine Ausrichtung der Kameras des Multi-Kamera Moduls relativ zueinander aus der erfassten Aufnahme zu berechnen, wobei die mit dem Multi-Kamera Modul erfasste Aufnahme ein Einzelbild pro Kamera umfasst, und wobei jedes Einzelbild die ersten und die zweiten virtuellen Teststrukturen abbildet und die Verarbeitungseinheit ferner dazu eingerichtet ist, eine Ausrichtung der Kameras relativ zueinander zu berechnen, indem Positionen der Teststrukturen im Einzelbild einer Kamera mit Positionen der entsprechenden Teststrukturen im Einzelbild einer weiteren Kamera verglichen und Abweichungen berechnet werden,
- eine Justage- und/oder Kalibriereinheit, die dazu eingerichtet ist, auf der Grundlage von Daten betreffend die Ausrichtung der Kameras des Multi-Kamera Moduls diese Kameras relativ zueinander auszurichten und so das Multi-Kamera Modul zu justieren und/oder zu kalibrieren.

Im Kontext der vorliegenden Beschreibung umfasst eine Kamera einen Bildsensor, beispielsweise einen CCD- oder CMOS-Sensor, und eine abbildende Optik, d.h. ein aus einer oder mehreren Linsen aufgebautes Objektiv. Die Ausrichtung der Kameras erfolgt durch Ausrichtung ihres Bildsensors und/oder durch eine Ausrichtung ihrer abbildenden Optik. Mit anderen Worten ist es vorgesehen, dass wahlweise die abbildende Optik und/oder der Bildsensor verschoben und/oder verkippt werden.

Als Teststrukturen sind verschiedene Muster geeignet. Beispielsweise geeignete Teststrukturen sind: ein (ggf. gedrehtes) Kreuz, eine H-Struktur, eine Kante, ein Punkt, ein Fadenkreuz, ein Siemens-Stern, ein Schachbrettmuster. Diese Muster sind auf der oder den Strichplatten vorhanden und werden zur Erzeugung der entsprechenden virtuellen Teststrukturen eingesetzt. Gleiches gilt für weiter unten erwähnte reale Teststrukturen, welche aus den gleichen Mustern aufgebaut sein können. Abweichend von den virtuellen Mustern werden die realen Testmuster nicht durch Projektion erzeugt, sondern sind beispielsweise auf einer Karte oder einer transparenten und von der Rückseite beleuchteten Platte, welche sich in einer Ebene erstrecken, vorhanden.

Bei der Verarbeitungseinheit handelt es sich ebenso wie bei der Justage- und Kalibriereinheit beispielsweise um einen PC, eine Workstation oder dergleichen. Die Justage- und Kalibriereinheit umfasst bevorzugt geeignete Aktoren, mit welchen die Kameras des Multi-Kamera Moduls ausgerichtet werden können. Alternativ werden Aktoren verwendet, die im Multi-Kamera Modul selbst vorhanden sind. Ferner ist insbesondere vorgesehen, dass nach erfolgter Justage und Kalibration die Kameras, beispielsweise deren Bildsensor und/oder deren abbildende Optik, fixiert werden. Hierzu ist beispielsweise vorgesehen, dass diese mit dem Gehäuse des Multi-Kamera Moduls verklebt werden.

Es ist vorgesehen, dass die optische Anordnung dazu eingerichtet ist, die ersten und zweiten Teststrukturen gleichzeitig zu erzeugen. Gemäß einer nicht beanspruchten Ausführungsform ist vorgesehen, diese zeitlich nacheinander zu erzeugen. Ferner umfasst jedes Einzelbild insbesondere beide Teststrukturen.

Vorteilhaft ermöglicht es die Vorrichtung zum Justieren und/oder Kalibrieren des Multi-Kamera Moduls, die vollständige Information über die relative Position der einzelnen Kameras zueinander aus einem einzigen Einzelbild, umfassend je ein Einzelbild pro Kamera, zu gewinnen. Die in den beispielsweise zwei Einzelbildern vorhandenen Teststrukturen werden ihrer Position nach auf dem betreffenden Bildsensor erfasst und anschließend werden die erfassten Ortkoordinaten (Pixelinformationen) der entsprechenden Teststrukturen im jeweiligen Einzelbild miteinander verglichen. Aus den vorhandenen Abweichungen kann die Lage der beispielweise zwei Kameras relativ zueinander berechnet werden. Ausgehend von dieser in einem einzigen Bild erfassten Information ist es möglich, eine vollständige Ausrichtung der Kameras zueinander um alle sechs Achsen vorzunehmen. Die Vorrichtung gemäß Aspekten der Erfindung erlaubt eine besonders zeitsparende, gleichzeitig präzise und somit sehr effiziente und ökonomische Kalibration und Justage des Multi-Kamera Moduls.

Handelt es sich bei den Kameras des Multi-Kamera Moduls um Prüflinge mit verschiedenen oder gar unbekannten Brennweiten, so wird zum Erzeugen der Teststruktur bevorzugt ein H-Muster eingesetzt. Anhand der Größe der Abbildung des H-Musters ist es möglich, den Abbildungsmaßstab der jeweiligen Kamera zu bestimmen und so auf die Brennweite von deren Optik zu schließen. Gemäß einem weiteren vorteilhaften Aspekt der Erfindung wird für eine optimale Subpixel-Ausrichtung der Kameras ein "Bowtie"-Muster eingesetzt.

Ausgehend von den Positions- und Lagedifferenzen der erfassten Teststrukturen, welche sich in unendlicher Entfernung zu dem Multi-Kamera Modul befinden, ist es möglich, eine Verkippung sowie eine Rotation der Kameras relativ zueinander zu bestimmen. Anhand der Positions- und Lagedifferenzen der erfassten Teststrukturen, die sich in endlicher Entfernung zu dem Multi-Kamera Modul befindet, wird eine laterale Position der Kameras relativ zueinander auf den gewünschten Wert eingestellt. Durch Auswertung beider Teststrukturen können die Kameras bezüglich aller sechs Achsen zueinander ausgerichtet werden.

Es ist ferner bevorzugt vorgesehen, dass die Muster auf den Strichplatten oder aber die Strichplatten selbst gegenüber einer optischen Achse des Kollimators um zumindest näherungsweise 3° bis 15° verkippt angeordnet werden. So wird die Möglichkeit geschaffen, an den virtuellen Teststrukturen, d.h. der Abbildung der Strichplatten, neben der zuvor beschriebenen Justage der beiden Kameras relativ zueinander auch eine MTF/SFR-Messung durchzuführen. So kann neben der Ausrichtung der Kameras relativ zueinander auch deren Fokuspunkt eingestellt werden.

Vorteilhaft ist die Vorrichtung dadurch fortgebildet, dass die Verarbeitungseinheit dazu eingerichtet ist, die Einzelbilder der Aufnahme gleichzeitig zu erfassen.

Mit anderen Worten werden die beiden Kameras des Multi-Kamera Moduls gleichzeitig ausgelöst, wobei beide Kameras sowohl die virtuellen Teststrukturen in endlicher als auch die virtuellen Teststrukturen in unendlicher Entfernung gleichzeitig erfassen.

Gemäß einer nicht beanspruchten Ausführungsform ist ferner vorgesehen, dass die optische Anordnung einen ersten Kollimator und einen zweiten Kollimator umfasst, wobei der erste Kollimator dazu eingerichtet ist, die erste Strichplatte als erste virtuelle Teststrukturen in unendlicher Entfernung abzubilden, und wobei der zweite Kollimator dazu eingerichtet ist, eine zweite Strichplatte als zweite virtuelle Teststrukturen in endlicher Entfernung abzubilden.

Bevorzugt ist bei dieser Ausführungsform vorgesehen, dass der erste Kollimator, welcher erste virtuelle Teststrukturen in unendlicher Entfernung abbildet und zumindest ein zweiter Kollimator, welcher zweite virtuelle Teststrukturen in endlicher Entfernung abbildet, auf einer gemeinsamen Halbkugel, d.h. einem Dom, angeordnet sind. Die Verwendung von zwei symmetrisch zum ersten Kollimator angeordneten zweiten Kollimatoren ist vorteilhaft vorgesehen. Eine mithilfe der zwei zweiten Kollimatoren, welche jeweils eine zweite virtuelle Teststruktur in endlicher Entfernung abbilden, erzeugte Teststruktur weist eine gewisse laterale Ausdehnung auf. Bei einer Teststruktur mit größerer lateraler Ausdehnung ist es möglich, eine präzisere Justage vorzunehmen.

Ferner ist die Vorrichtung gemäß einer nicht beanspruchten Ausführungsform insbesondere dadurch fortgebildet, dass die optische Anordnung einen ersten Kollimator umfasst, der dazu eingerichtet ist, die erste Strichplatte als erste virtuelle Teststrukturen in unendlicher Entfernung abzubilden, wobei in endlicher Entfernung zu dem Multi-Kamera Modul zweite reale Teststrukturen angeordnet sind.

Vorteilhaft ist bei der Vorrichtung gemäß diesem Ausführungsbeispiel lediglich ein Kollimator notwendig. Um eine Teststruktur in endlicher Entfernung bereitzustellen, wird auf eine reale Teststruktur, beispielsweise eine Karte, eine von hinten beleuchtete Strichplatte oder dergleichen zurückgegriffen. Eine solche Vorrichtung zeichnet sich durch einen besonders einfachen und kostengünstigen Aufbau aus.

Ferner ist die Vorrichtung entweder dadurch fortgebildet, dass die optische Anordnung einen bifokalen Kollimator umfasst, der eine Strichplatte als erste virtuelle Teststrukturen in unendlicher Entfernung abbildet und die Strichplatte als zweite virtuelle Teststrukturen in endlicher Entfernung abbildet.

Der bifokale Kollimator in der Vorrichtung gemäß dieser Ausführungsform ist besonders kompakt aufgebaut.

Ferner ist alternativ vorgesehen, dass die optische Anordnung einen Kollimator umfasst, wobei eine erste Strichplatte und eine zweite Strichplatte in unterschiedlichen Entfernungen zu einem Fokus des Kollimators angeordnet sind, so dass die ersten virtuellen Teststrukturen und die zweiten virtuellen Teststrukturen durch den Kollimator erzeugt werden.

Auch diese Vorrichtung benötigt lediglich einen einzigen Kollimator. Dieser ist im Vergleich zu einem bifokalen Kollimator sogar noch einfacher aufgebaut, wodurch die Vorrichtung kostengünstig wird.

Gemäß einer weiteren vorteilhaften Ausführungsform ist die Vorrichtung dadurch fortgebildet, dass der Kollimator als Autokollimator ausgebildet ist, der dazu eingerichtet ist, das Multi-Kamera Modul anhand von Referenzflächen des Multi-Kamera Moduls auszurichten.

Die Verwendung eines Autokollimators erlaubt es vorteilhaft, das gesamte Multi-Kamera Modul, beispielsweise anhand von Referenzflächen, welche sich am Gehäuse des Multi-Kamera Moduls befinden, auszurichten.

Die Aufgabe wird ferner gelöst durch die Verwendung einer Vorrichtung zum Justieren und/oder Kalibrieren eines Multi-Kamera Moduls nach einem oder mehreren der zuvor genannten erfindungsgemäßen Aspekte. Auf die Verwendung treffen gleiche oder ähnliche Vorteile zu, wie sie bereits im Hinblick auf die Vorrichtung selbst erwähnt wurden. Gleiches gilt für vorteilhafte Fort- und Weiterbildungen.

Die Aufgabe wird ferner gelöst durch ein Verfahren zum Justieren und/oder Kalibrieren eines Multi-Kamera Moduls mit mehreren Kameras, die folgenden Schritte umfassend:
- gleichzeitiges Bereitstellen erster virtueller Teststrukturen in unendlicher Entfernung und zweiter virtueller Teststrukturen in endlicher Entfernung, wobei die ersten virtuellen Teststrukturen in unendlicher Entfernung und die zweiten virtuellen Teststrukturen in endlicher Entfernung durch eine optische Anordnung bereitgestellt werden, wobei die optische Anordnung einen einzigen Kollimator (12, 36) umfasst, und indem
   a) ein bifokaler Kollimator eine einzige Strichplatte als erste virtuelle Teststrukturen in unendlicher Entfernung und die Strichplatte als zweite virtuelle Teststrukturen in endlicher Entfernung abbildet oder
   b) eine erste Strichplatte und eine zweite Strichplatte in unterschiedlichen Entfernungen zu einem Fokus des Kollimators angeordnet werden, so dass die ersten virtuellen Teststrukturen (22) und die zweiten virtuellen Teststrukturen (26) durch den Kollimator (12) erzeugbar sind,
- gleichzeitiges Erfassen einer Aufnahme der ersten und der zweiten virtuellen Teststrukturen mit dem Multi-Kamera Modul, wobei mit dem Multi-Kamera Modul eine Aufnahme erfasst wird, die ein Einzelbild pro Kamera umfasst, wobei jedes Einzelbild die ersten und die zweiten virtuellen Teststrukturen abbildet,
- Auswerten der erfassten Aufnahme, wobei eine Ausrichtung der Kameras des Multi-Kamera Moduls relativ zueinander aus der erfassten Aufnahme berechnet wird, indem Positionen der Teststrukturen im Einzelbild einer Kamera mit Positionen der entsprechenden Teststrukturen im Einzelbild einer weiteren Kamera verglichen und Abweichungen berechnet werden,
- Justieren und/oder Kalibrieren der Kameras des Multi-Kamera Moduls relativ zueinander auf der Grundlage von Daten betreffend die Ausrichtung der Kameras des Multi-Kamera Moduls.

Auch auf das Verfahren zum Justieren und/oder Kalibrieren des Multi-Kamera Moduls treffen gleiche und ähnliche Vorteile sowie Aspekte zur Fort- und Weiterbildung zu, wie sie bereits im Hinblick auf die Vorrichtung zum Justieren und/oder Kalibrieren des Kamera Moduls erwähnt wurden, weshalb auf entsprechende Wiederholungen verzichtet werden soll.

Das Verfahren ist insbesondere dadurch fortgebildet, dass die Einzelbilder der Aufnahme gleichzeitig erfasst werden. Ferner werden insbesondere die ersten und die zweiten Teststrukturen gleichzeitig bereitgestellt.

Gemäß einer weiteren nicht beanspruchten Ausführungsform ist das Verfahren dadurch fortgebildet, dass die ersten virtuellen Teststrukturen in unendlicher Entfernung durch Abbilden einer ersten Strichplatte mit einem ersten Kollimator der optischen Anordnung bereitgestellt werden und die zweiten Teststrukturen als virtuelle Teststrukturen in endlicher Entfernung durch Abbilden einer zweiten Strichplatte mit einem zweiten Kollimator der optischen Anordnung bereitgestellt werden.

Insbesondere ist das Verfahren gemäß einer nicht beanspruchten Ausführungsform dadurch fortgebildet, dass die ersten virtuellen Teststrukturen in unendlicher Entfernung durch Abbilden einer ersten Strichplatte mit einem ersten Kollimator der optischen Anordnung bereitgestellt werden, die zweiten Teststrukturen als reale Teststrukturen in endlicher Entfernung bereitgestellt werden, indem in endlicher Entfernung zu dem Multi-Kamera Modul zweite reale Teststrukturen angeordnet werden.

Es ist entweder vorgesehen, dass die ersten virtuellen Teststrukturen in unendlicher Entfernung und die zweiten Teststrukturen als virtuelle Teststrukturen in endlicher Entfernung bereitgestellt werden, indem mit einem bifokalen Kollimator der optischen Anordnung eine Strichplatte als erste virtuelle Teststrukturen in unendlicher Entfernung abgebildet und die Strichplatte als zweite virtuelle Teststrukturen in endlicher Entfernung abgebildet werden.

Alternativ ist vorgesehen, dass die ersten virtuellen Teststrukturen in unendlicher Entfernung und die zweiten Teststrukturen als virtuelle Teststrukturen in endlicher Entfernung bereitgestellt werden, indem eine erste Strichplatte und eine zweite Strichplatte in unterschiedlichen Entfernungen zu einem Fokus des Kollimators angeordnet werden.

Eine vorteilhafte Ausführungsform zeichnet sich dadurch aus, dass das Multi-Kamera Modul anhand von Referenzflächen des Multi-Kamera Moduls mit dem Kollimator, der als Autokollimator ausgebildet ist, ausgerichtet wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Multi-Kamera Modul in einer schematisch vereinfachten Seitenansicht,
- Fig. 2: einen Kollimator zur Abbildung einer Teststruktur in unendliche Entfernung als Teil einer Vorrichtung zum Justieren und/oder Kalibrieren eines Multi-Kamera Moduls in einer schematisch vereinfachten Seitenansicht, wobei mit a) bzw. b) jeweils ein von einer Kamera dieser Vorrichtung erfasstes schematisch dargestelltes Einzelbild bezeichnet ist,
- Fig. 3 a), b): die Einzelbilder aus Fig. 2 in einer vergrößerten Darstellung,
- Fig. 4: einen Kollimator zur Abbildung einer Teststruktur in endliche Entfernung als Teil einer Vorrichtung zum Justieren und/oder Kalibrieren eines Multi-Kamera Moduls in einer schematisch vereinfachten Seitenansicht, wobei mit a) bzw. b) jeweils ein von einer Kamera dieser Vorrichtung erfasstes schematisch dargestelltes Einzelbild bezeichnet ist,
- Fig. 5 a), b): die Einzelbilder aus Fig. 4 in einer vergrößerten Darstellung,
- Fig. 6: eine Vorrichtungen zum Justieren und/oder Kalibrieren eines Multi-Kamera Moduls,
- Fig. 7: einzelne Zustände während der Justage und/oder Kalibrierung der beiden Kameras eines Multi-Kamera Moduls, wobei in der Spalte a) und b) jeweils Einzelbilder der Kameras dieses Multi-Kamera Moduls und in Spalte c) schematisch vereinfachte Seitenansichten des Multi-Kamera Moduls dargestellt sind,
- Fig. 8: verschiedene Muster zum Erzeugen virtueller und realer Teststrukturen und
- Fig. 9 - 11: weitere Vorrichtungen zum Justieren und/oder Kalibrieren eines Multi-Kamera Moduls, jeweils in schematisch vereinfachter Seitenansicht.

In den Zeichnungen sind jeweils gleiche oder gleichartige Elemente und/oder Teile mit denselben Bezugsziffern versehen, so dass von einer erneuten Vorstellung jeweils abgesehen wird.

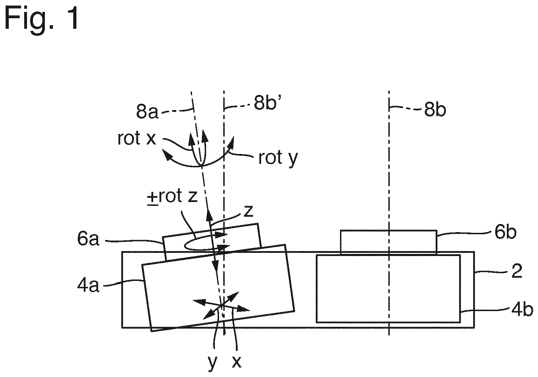

Fig. 1 zeigt in einer schematisch vereinfachten Seitenansicht ein Multi-Kamera Modul 2, welches beispielhaft zwei Kameras, nämlich eine erste Kamera 4a und eine zweite Kamera 4b umfasst. Die folgenden Erläuterungen treffen analog auf Multi-Kamera Module 2 zu, die mehr als zwei Kameras umfassen. Die beiden beispielhaft dargestellten Kameras 4a, 4b umfassen jeweils einen nicht dargestellten Bildsensor, beispielsweise einen CCD- oder CMOS-Sensor. Außerdem umfasst jede der Kameras 4a, 4b jeweils eine abbildende Optik 6a, 6b, wobei die abbildende Optik der ersten Kamera 4a als erste abbildende Optik 6a und diejenige der zweiten Kamera 4b als zweite abbildende Optik 6b bezeichnet wird. Bei den abbildenden Optiken 6a, 6b handelt es sich beispielsweise um aus einer oder mehreren Linsen aufgebaute Objektive.

Das Multi-Kamera Modul 2 kommt ferner beispielsweise in der Medizintechnik bei einem 3D-Endoskop, in der Automobiltechnik als Distanz Stereo-Kamera oder auch im Multimediabereich als 3D-Kamera zum Einsatz. Die Größe und der konstruktive Aufbau des Multi-Kamera Moduls 2 und seiner Kameras 4a, 4b, sowohl im Hinblick auf den Bildsensor als auch bezüglich der optischen Konstruktion der zugehörigen abbildenden Optiken 6a, 6b, variiert also stark in Abhängigkeit vom jeweiligen Einsatzgebiet.

Bevor das Multi-Kamera Modul 2 seiner bestimmungsgemäßen Verwendung zugeführt wird, ist es notwendig, die beiden einzelnen Kameras 4a, 4b zueinander auszurichten, d.h. zu justieren und zu kalibrieren. In Fig. 1 ist beispielhaft die erste Kamera 4a gegenüber der zweiten Kamera 4b verkippt dargestellt. Die strichpunktiert gezeichnete zweite optische Achse 8b der zweiten Kamera 4b ist parallel verschoben auch durch das Zentrum der ersten Kamera 4a verlaufend dargestellt und dort mit 8b' bezeichnet. Die erste optische Achse 8a der ersten Kamera 4a weicht in Fig. 1 von der Orientierung der zweiten optischen Achse 8b ab.

Um die erste Kamera 4a bezüglich der zweiten Kamera 4b zu justieren, sind insgesamt sechs Freiheitsgrade einzustellen. Zunächst wären da die translatorischen Freiheitsgrade, um die die beiden Kameras 4a, 4b relativ zueinander in einer Ebene verschoben sein können. Diese Freiheitsgrade bzw. Verschiebeachsen sind schematisch mit gekreuzten Doppelpfeilen angedeutet und werden mit x und y bezeichnet. Ferner können die beiden Kameras 4a, 4b gegeneinander verkippt sein. Eine Verkippung um die x-Achse wird mit rot x, eine Verkippung um die y-Achse wird mit rot y bezeichnet. Die Kippbewegungen sind mit gekreuzten gebogenen Doppelpfeilen angedeutet. Zu diesen insgesamt vier Freiheitsgraden kommen zwei Rotationsfreiheitsgrade, bezüglich der die Kameras unter Rotation um ihre Hoch- oder z-Achse verdreht zueinander angeordnet sein können. Eine solche Verdrehung wird mit +/- rot z bezeichnet und ist mit einem gebogenen Doppelpfeil dargestellt. Das Vorzeichen deutet den unterschiedlichen Drehsinn der möglichen Verdrehung an. Verdrehungen mit unterschiedlichem Drehsinn werden jeweils als ein Freiheitsgrad angesehen.

Theoretisch existiert für die Anordnung der beiden Kameras 4a, 4b relativ zueinander noch ein weiterer Freiheitsgrad, nämlich eine Verschiebung in z-Richtung, also zumindest näherungsweise entlang ihrer optischen Achsen 8a bzw. 8b. Diese Verschiebung wird mit z bezeichnet und ist der Vollständigkeit halber in Fig. 1 mit einem entsprechenden entlang der ersten optischen Achse 8a verlaufenden Doppelpfeil dargestellt. Dieser Freiheitsgrad wird jedoch nicht kalibriert und justiert. Erstens ist die Kalibrierung in z-Richtung weniger kritisch als in den übrigen Freiheitsgraden, zweitens wird davon ausgegangen, dass die erste und zweite Kamera 4a, 4b im Gehäuse des Multi-Kamera Moduls 2 ausreichend genau in gleicher Höhe aufgenommen sind.

Im Folgenden wird eine Vorrichtung sowie ein Verfahren zum Justieren eines Multi-Kamera Moduls 2, wie es beispielhaft und schematisch Fig. 1 zeigt, erläutert, wobei die folgenden sechs Freiheitsgrade eingestellt werden: x, y, rot x, rot y und +/- rot z.

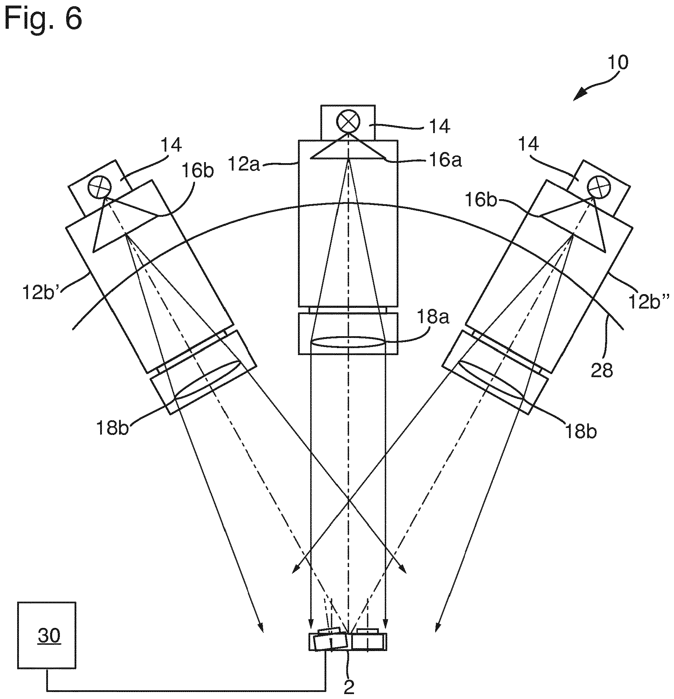

Eine Vorrichtung 10 zum Justieren und Kalibrieren eines Multi-Kamera Moduls 2 ist in verschiedenen Ausführungsbeispielen jeweils in einer schematisch vereinfachten Seitenansicht in den Fig. 6 und 9 bis 11 dargestellt. Die Vorrichtung 10 umfasst jeweils eine optische Anordnung zum gleichzeitigen Erzeugen erster virtueller Teststrukturen in unendlicher Entfernung und zweiter (je nach Ausführungsbeispiel) virtueller oder realer Teststrukturen in endlicher Entfernung. Bevor auf die Vorrichtungen 10 gemäß den verschiedenen Ausführungsbeispielen im Detail eingegangen wird, soll die Erzeugung und Bedeutung der Teststrukturen im Hinblick auf Justage und Kalibration der einzelnen Kameras 4a, 4b des Multi-Kamera Moduls 2 prinzipiell erläutert werden.

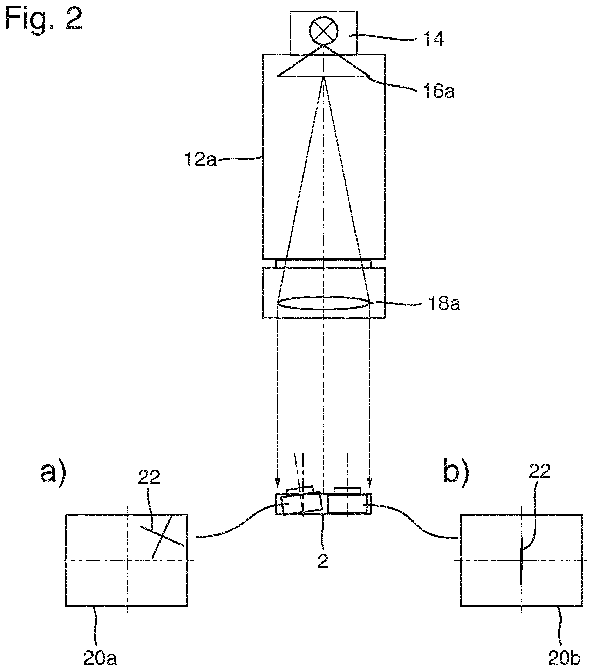

Hierzu zeigt Fig. 2 in einer schematisch vereinfachten Seitenansicht einen ersten Kollimator 12a, der dazu eingerichtet ist, eine erste virtuelle Teststruktur in unendlicher Entfernung zu erzeugen. Hierzu umfasst der erste Kollimator 12a, der auch als Unendlich-Kollimator bezeichnet wird, eine Beleuchtung 14, mit der eine erste Strichplatte 16a von der Rückseite beleuchtet wird. Ein erstes Objektiv 18a ist so positioniert, dass die erste Strichplatte 16a im Unendlichen abgebildet wird.

Der erste Kollimator 12a beleuchtet das Multi-Kamera Modul 2. Dessen erste und zweite Kamera 4a, 4b erfassen jeweils die mit a) bzw. b) bezeichneten und schematisch dargestellten Einzelbilder, also ein erstes Einzelbild 20a und ein zweites Einzelbild 20b. Die beiden Einzelbilder 20a, 20b bilden gemeinsam eine von dem Multi-Kamera Modul 2 erfasste Aufnahme. Die beiden Einzelbilder 20a, 20b umfassen jeweils eine Abbildung der von dem ersten Kollimator 12a erzeugten ersten virtuellen Teststruktur 22. Aufgrund der Verkippung der beiden Kameras 4a, 4b relativ zueinander (vgl. auch Fig. 1), befindet sich die erste virtuelle Teststruktur 22 in den beiden Einzelbildern 20a, 20b an unterschiedlichen Positionen.

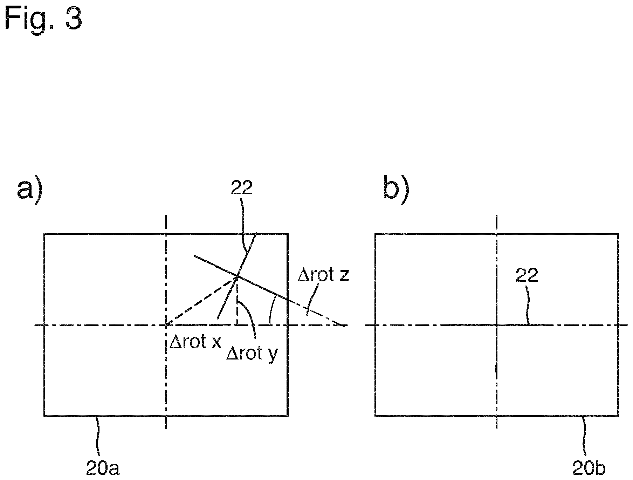

Fig. 3 zeigt die aus Fig. 2 bekannten Einzelbilder 20a, 20b in vergrößerter Darstellung. Beispielhaft wird angenommen, dass die zweite Kamera 4b, die das zweite Einzelbild 20b erfasst, korrekt ausgerichtet ist. Aus diesem Grund befindet sich die erste virtuelle Teststruktur 22 im zweiten Einzelbild 20b exakt im Zentrum. Im ersten Einzelbild 20a, welches mit der verkippten ersten Kamera 4a aufgenommen wurde, ist die virtuelle Teststruktur 22 aus dem Zentrum heraus verschoben. Ihre Abweichung vom Zentrum wird mit Δ rot x und Δ rot y bezeichnet. Die mit Δ rot x bezeichnete Verschiebung resultiert aus einer Verkippung der ersten Kamera 4a um die Richtungsachse x (in Fig. 1 mit x bezeichnet). Die Abweichung des Zentrums der Abbildung der ersten virtuellen Teststruktur 22 im ersten Einzelbild 20a um den mit Δ rot y bezeichneten Betrag resultiert aus der Verkippung der ersten Kamera 4a um die in Fig. 1 mit y bezeichnete Richtungsachse. Die erste virtuelle Teststruktur 22 ist im ersten Einzelbild 20a nicht nur aus dem Zentrum heraus verschoben, sondern auch gegenüber der im zweiten Einzelbild 20b vorhandenen ersten virtuellen Teststruktur 22 um einen Winkel rotiert. Dieser Rotationswinkel Δ rot z entspricht einer Verdrehung der ersten Kamera 4a gegenüber der zweiten Kamera 4b um die in Fig. 1 mit +/- rot z bezeichnete Richtung.

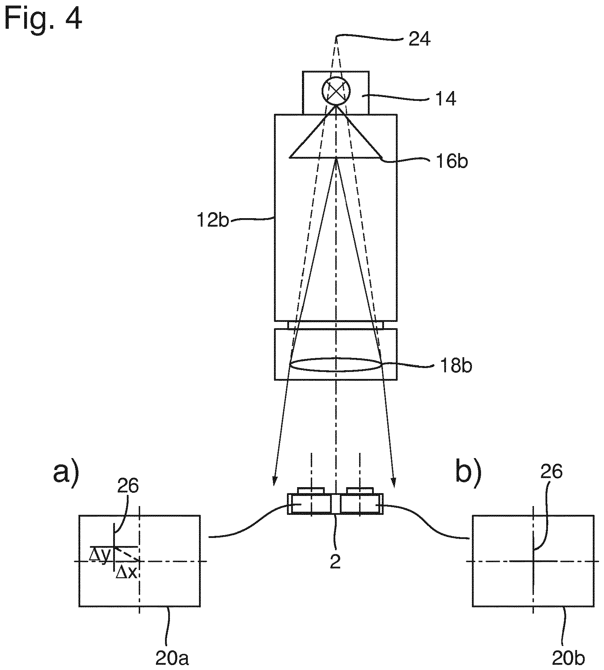

Aus den Werten von Δ rot x, Δ rot y und Δ rot z sind die vier Freiheitsgrade rot x, rot y und +/- rot z (vgl. Fig. 1) bestimmbar. Um auch die verbleibenden Freiheitsgrade zu bestimmen, umfasst die optische Anordnung neben dem ersten Kollimator 12a, welcher eine Abbildung der ersten Strichplatte 16a ins Unendliche liefert, einen zweiten Kollimator 12b, der eine endlich entfernte Abbildung liefert und in schematisch vereinfachter Seitenansicht in Fig. 4 dargestellt ist.

Der zweite Kollimator 12b umfasst ebenfalls eine Beleuchtung 14, welche eine zweite Strichplatte 16b von der Rückseite her beleuchtet. Das zweite Objektiv 18b bildet die zweite Strichplatte 16b in eine endliche Entfernung ab. Mit gestrichelter Linie ist das virtuelle Kollimatorbild 24 angedeutet, welches sich für das Multi-Kamera Modul 2 als reales Bild in endlicher Entfernung darstellt. Die erste und zweite Kamera 4a, 4b des Multi-Kamera Moduls 2 in Fig. 4 sollen beispielhaft bereits um die im Zusammenhang mit den Fig. 2 und 3 beschriebenen Freiheitsgrade rot x, rot y und +/- rot z korrigiert sein. Es verbleiben somit die beiden Freiheitsgrade x und y. Ein von der ersten bzw. zweiten Kamera 4a, 4b erfasstes Einzelbild 20a, 20b ist in Fig. 4 mit a) und b) bezeichnet und jeweils schematisch vereinfacht dargestellt. Die beiden Einzelbilder 20a, 20b umfassen jeweils eine zweite virtuelle Teststruktur 26.

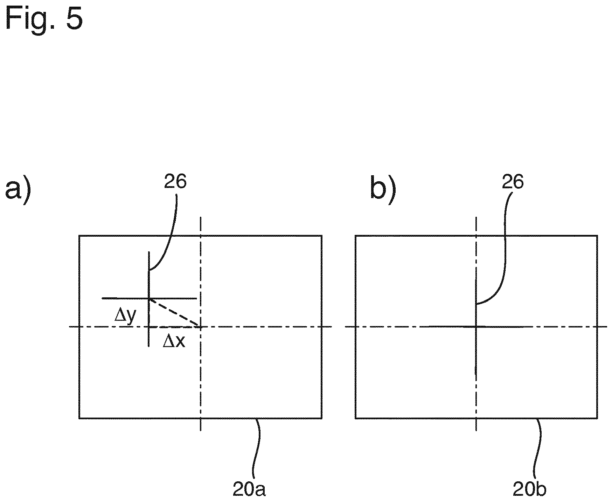

In Fig. 5a bzw. 5b sind die beiden Einzelbilder 20a, 20b jeweils vergrößert dargestellt. Die zweite virtuelle Teststruktur 26 ist im ersten Einzelbild 20a aus dem Zentrum heraus verschoben. Die Verschiebung Δx entspricht dabei einer Verschiebung in x-Richtung (vgl. Fig 1). Die Verschiebung der zweiten virtuellen Teststruktur 26 um den Betrag Δy entspricht einer Verschiebung der ersten Kamera 4a in y-Richtung.

Aus den Positionen der ersten virtuellen Teststrukturen 22 im ersten und zweiten Einzelbild 20a, 20b (Fig. 3) und der Position der zweiten virtuellen Teststrukturen 26 im ersten und zweiten Einzelbild 20a, 20b (Fig. 5) können alle sechs Freiheitsgrade x, y, rot x, rot y und +/- rot z der ersten und zweiten Kamera 4a, 4b relativ zueinander bestimmt werden. Die optische Anordnung der Vorrichtung 10 ist dazu eingerichtet, die erste und zweite Teststruktur 22, 26 gleichzeitig auf das Multi-Kamera Modul 2 zu projizieren, so dass in den von den einzelnen Kameras 4a, 4b des Multi-Kamera Moduls 2 erfassten Einzelbildern 20a, 20b abweichend von den Darstellungen in den Fig. 3 und 5 jeweils die erste virtuelle Teststruktur 22 und die zweite virtuelle Teststruktur 26 vorhanden ist. So lässt sich aus einer einzelnen Aufnahme des Multi-Kamera Moduls 2, welche das erste und zweite Einzelbild 20a, 20b umfasst, die vollständige Orientierung der ersten und zweiten Kamera 4a, 4b des Multi-Kamera Moduls 2 relativ zueinander gewinnen. Ausgehend von den mit einer einzigen Aufnahme erfassten Daten ist es also möglich, die beiden Kameras 4a, 4b bezüglich ihrer zuvor genannten sechs Freiheitsgrade relativ zueinander auszurichten.

Fig. 6 zeigt eine Vorrichtung 10 zum Justieren und Kalibrieren eines Multi-Kamera Moduls 2 gemäß einem Ausführungsbeispiel. Die Vorrichtung 10 umfasst einen ersten Kollimator 12a, welcher eine erste virtuelle Teststruktur in unendlicher Entfernung abbildet. Der erste Kollimator 12a ist so aufgebaut, wie dies im Zusammenhang mit Fig. 2 beschrieben ist. Außerdem umfasst die Vorrichtung 10 zwei zweite Kollimatoren 12b' und 12b", welche jeweils eine zweite virtuelle Teststruktur in eine endliche Entfernung abbilden. Die zweiten Kollimatoren 12b' und 12b" sind jeweils so aufgebaut, wie dies im Zusammenhang mit Fig. 4 beschrieben ist.

Der erste Kollimator 12a und die beiden zweiten Kollimatoren 12b' und 12b" bilden gemeinsam eine optische Anordnung zum Erzeugen erster und zweiter virtueller Teststrukturen, welche in unendlicher Entfernung bzw. in endlicher Entfernung vorhanden sind. Der erste Kollimator 12a und die beiden zweiten Kollimatoren 12b' und 12b" sind auf einer gemeinsamen Kugelsphäre 28, auch als Dom bezeichnet, angeordnet. Außerdem umfasst die Vorrichtung 10 eine Verarbeitungseinheit 30, bei der es sich beispielsweise um einen PC, eine Workstation oder dergleichen handelt. Die Verarbeitungseinheit 30 dient zum Auswerten einer mit dem Multi-Kamera Modul 2 erfassten Aufnahme der ersten und zweiten Teststrukturen, die mit dem ersten Kollimator 12a und mit den beiden zweiten Kollimatoren 12b' und 12b" erzeugt wurden. Die ersten und die zweiten Teststrukturen werden gleichzeitig oder zeitlich nacheinander erzeugt. Die Verarbeitungseinheit 30 ist dazu eingerichtet, eine Ausrichtung der beiden Kameras 4a, 4b des Multi-Kamera Moduls 2 relativ zueinander aus der erfassten Aufnahme zu berechnen. Die mit dem Multi-Kamera Modul 2 erfasste Aufnahme umfasst je ein Einzelbild 20a, 20b pro Kamera 4a, 4b. Jedes Einzelbild 20a, 20b umfasst eine Abbildung der ersten und/oder der zweiten Teststrukturen 22, 26, abhängig davon, ob die Teststrukturen 22, 26 gleichzeitig oder nacheinander erzeugt werden. Die Verarbeitungseinheit 30 ist ferner dazu eingerichtet, eine Ausrichtung der Kameras 4a, 4b relativ zueinander zu berechnen, indem Positionen der Teststrukturen 22, 26 im Einzelbild 20a, 20b einer Kamera 4a, 4b mit Positionen der entsprechenden Teststrukturen 22, 26 im Einzelbild 20a, 20b einer weiteren Kamera 4a, 4b verglichen und Abweichungen berechnet werden.

Ferner umfasst die Vorrichtung 10 eine Justage und Kalibriereinheit (nicht dargestellt), die dazu eingerichtet ist, auf der Grundlage von Daten betreffend die Ausrichtung der Kameras 4a, 4b des Multi-Kamera Moduls 2 diese Kameras 4a, 4b relativ zueinander auszurichten und so das Multi-Kamera Modul 2 zu justieren und zu kalibrieren. Hierzu umfasst die Justage und Kalibriereinheit beispielsweise geeignete Aktoren. Alternativ werden in dem Multi-Kamera Modul 2 vorhandene Aktoren benutzt.

Insbesondere ist vorgesehen, dass die Verarbeitungseinheit 30 dazu eingerichtet ist, die Einzelbilder 20a, 20b der Aufnahme gleichzeitig zu erfassen.

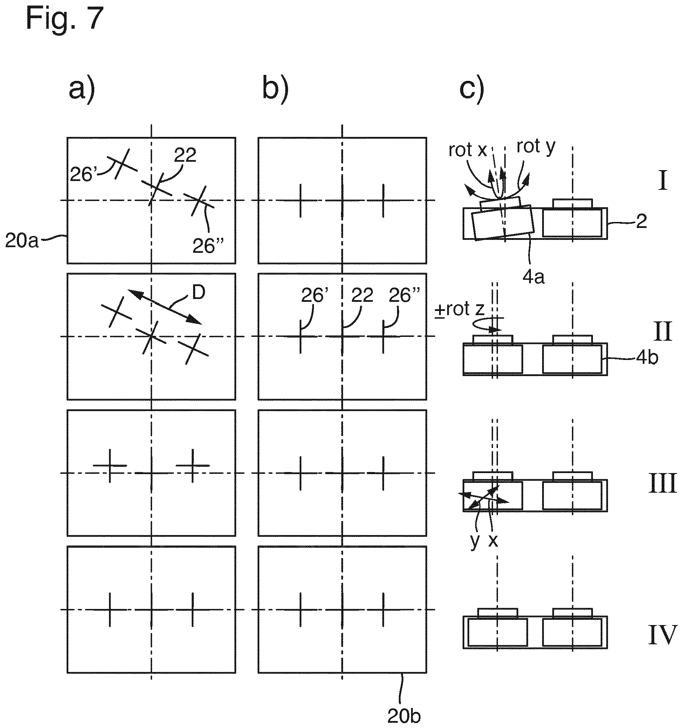

Fig. 7 zeigt in schematisch vereinfachter Darstellung eine Abfolge von ersten Einzelbildern 20a, die mit der ersten Kamera 4a aufgenommen wurden (Spalte a)). In Spalte b) ist eine Abfolge von zweiten Einzelbildern 20b gezeigt, die mit der zweiten Kamera 4b aufgenommen wurden. Aus Gründen der Übersicht sind lediglich einige der Bilder 20a, 20b mit Bezugszeichen versehen. Beispielsweise handelt es sich bei dem in der ersten Zeile dargestellten ersten und zweiten Bild 20a, 20b um die Einzelbilder 20a, 20b, wie sie von der ersten und zweiten Kamera 4a, 4b des Multi-Kamera Moduls 2 aufgenommen werden, bevor dieses in der in Fig. 6 dargestellten Vorrichtung 10 justiert wird. Erneut ist lediglich beispielhaft angenommen, dass die zweite Kamera 4b bereits ausgerichtet ist. Jedes der Einzelbilder 20a, 20b umfasst eine erste virtuelle Teststruktur 22 und zwei zweite virtuelle Teststrukturen 26', 26". Erneut sind aus Gründen der Übersichtlichkeit in lediglich einigen der Einzelbilder 20a, 20b die erste und zweite virtuelle Teststruktur 22, 26', 26" mit Bezugszeichen versehen. Die zweite virtuelle Teststruktur 26' ist beispielsweise von dem zweiten Kollimator 12b' der in Fig. 6 dargestellten Vorrichtung 10 erzeugt. Die zweite virtuelle Teststruktur 26" ist mit dem zweiten Kollimator 12b" erzeugt. Der erste Kollimator 12a erzeugt die erste virtuelle Teststruktur 22. Die erste Kamera 4a ist gegenüber der zweiten Kamera 4b in allen sechs Freiheitsgraden dejustiert. Spalte c) in Fig. 7 zeigt beispielhaft das Multi-Kamera Modul 2, wobei in der zugehörigen Zeile jeweils die Justage der entsprechenden Freiheitsgrade erläutert wird. Lediglich einige der dargestellten Multi-Kamera Module 2 sind aus Gründen der Übersichtlichkeit mit Bezugszeichen versehen.

In der ersten Zeile (bezeichnet mit I.) wird die Verkippung der ersten Kamera 4a gegenüber der zweiten Kamera 4b um die x- bzw. y-Achse behoben. Analog den Erläuterungen im Zusammenhang mit Fig. 3 wird die erste virtuelle Teststruktur 22 im ersten Einzelbild 20a bezüglich ihrer Abweichung von der ersten virtuellen Teststruktur 22 im zweiten Einzelbild 20b untersucht. Dies entspricht der Abweichung der ersten virtuellen Teststruktur 22 vom Ursprung im ersten Einzelbild 20a. Der Abstand des Mittelpunkts der ersten virtuellen Teststruktur 22 auf der Abszisse entspricht dabei der Korrektur der Verkippung rot x, der Abstand auf der Ordinate entspricht der Korrektur von rot y. Werden diese Korrekturen in einem ersten Schritt ausgeführt, ergibt sich die Darstellung in der zweiten Zeile (bezeichnet mit II.). Die erste virtuelle Teststruktur 22 befindet sich nun im Zentrum des ersten Einzelbildes 20a. Anschließend erfolgt eine Korrektur der Rotation der ersten Kamera 4a in Bezug auf die zweite Kamera 4b. Die Korrektur des Freiheitsgrades rot z wird wahlweise anhand der ersten virtuellen Teststruktur 22 oder anhand der zweiten virtuellen Teststrukturen 26', 26" vorgenommen. In diesem Zusammenhang ist es vorteilhaft, dass die zweiten virtuellen Teststrukturen 26', 26" einen Abstand D zueinander aufweisen. Die Bestimmung des Verkippwinkels Δ rot z (vgl. Fig. 3) kann bei einer gewissen Größe des Abstands D mit höherer Genauigkeit erfolgen. Nachdem die Verdrehung der ersten Kamera 4a in Bezug auf die zweite Kamera 4b des Multi-Kamera Moduls 2 erfolgt ist, ergibt sich die Darstellung in der dritten Zeile von Fig. 7 (bezeichnet mit III.). Nunmehr ist lediglich die Verschiebung der beiden Kameras 4a, 4b relativ zueinander zu bestimmen und zu korrigieren. Die Verschiebung wird anhand der zweiten virtuellen Teststruktur 26 korrigiert. Beispielhaft ist lediglich eine Verschiebung Δy (vgl. Fig. 5) vorhanden. Diese wird korrigiert und es ergibt sich die Darstellung in der vierten Zeile von Fig. 7 (bezeichnet mit IV.).

Das im Zusammenhang mit Fig. 7 beschriebene Verfahren zur Ausrichtung der ersten Kamera 4a in Bezug auf die zweite Kamera 4b ist lediglich aus Gründen der besseren Verständlichkeit in einzelnen aufeinanderfolgenden Schritten erläutert worden. Das Verfahren wird von der Vorrichtung 10 tatsächlich nicht iterativ durchgeführt, da alle Informationen in Bezug auf die Ausrichtung aller sechs Freiheitsgrade sich bereits aus einem Vergleich des ersten Einzelbilds 20a (dargestellt in Zeile I.) mit dem zweiten Einzelbild 20b in dieser Zeile gewinnen lassen. Da es sich nicht um ein iteratives Verfahren handelt, arbeitet dieses besonders schnell und effizient.

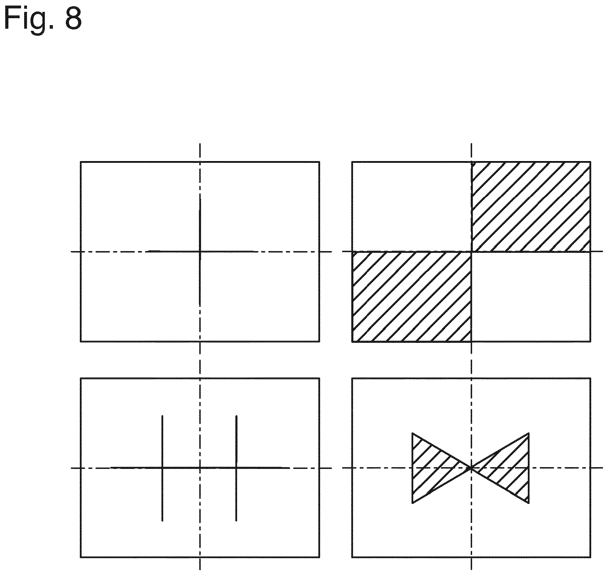

Fig. 8 zeigt verschiedene Muster, wie sie auf der ersten und/oder zweiten Strichplatte 16a, 16b eingesetzt werden können. Lediglich beispielhaft ist in den übrigen Figuren stets ein Kreuz dargestellt. Die Teststrukturen können beispielsweise um 3°-15° zum Pixelraster der Kamera(s) 4a, 4b gedreht ausgerichtet sein, um eine vorteilhafte Messung der MTF zu erreichen. Die H-Strukturen, wie unten links dargestellt, oder aus mehreren Kreuzen bestehende Muster, wie unten rechts dargestellt, eignen sich besonders, wenn der Abbildungsmaßstab der ersten und zweiten Kamera 4a, 4b unterschiedlich und insbesondere nicht bekannt ist. Dies kann der Fall sein, wenn unterschiedliche abbildende Optiken 6a, 6b eingesetzt werden, deren Brennweiten nicht bekannt sind. In einem solchen Fall wird, bevor eine entsprechende Ausrichtung der Kameras 4a, 4b zueinander stattfindet, zunächst der Abbildungsmaßstab bestimmt und ggf. die miteinander zu vergleichenden Einzelbilder entsprechend skaliert. Eine Bowtie-Struktur, wie sie in der unteren Zeile in der Mitte dargestellt ist, eignet sich insbesondere, um eine subpixelgenaue Justage vorzunehmen. Die gezeigten Muster sind nicht nur als virtuelle Testmuster, sondern auch als reale Testmuster geeignet.

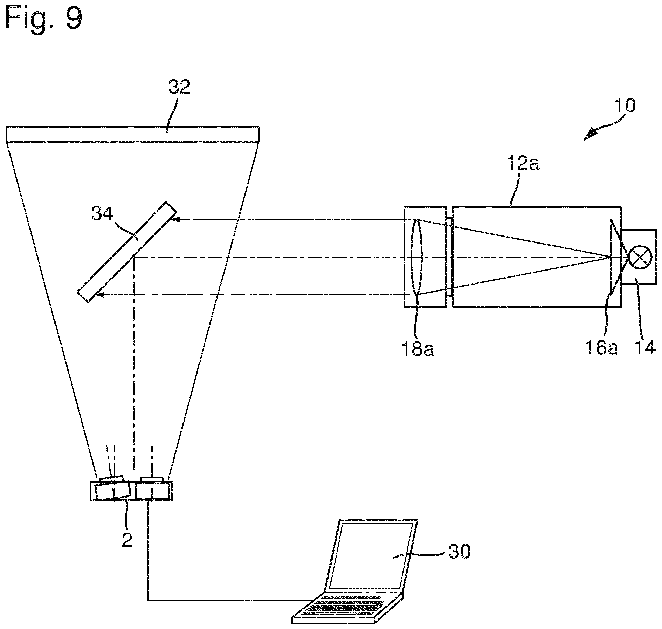

Fig. 9 zeigt ein weiteres Ausführungsbeispiel einer Vorrichtung 10 zum Justieren und Kalibrieren eines Multi-Kamera Moduls 2. Die Vorrichtung 10 umfasst einen ersten Kollimator 12a, welcher so aufgebaut ist, wie dies im Zusammenhang mit Fig. 2 beschrieben wurde. Ferner umfasst die Vorrichtung 10 eine reale Teststruktur 32, beispielsweise eine Karte oder eine hintergrundbeleuchtete Platte, auf der beispielsweise eines der in Fig. 8 gezeigten Muster vorhanden ist. Die reale Teststruktur 32 erfüllt die gleiche Funktion wie die zweite virtuelle Teststruktur 26 in dem in Fig. 6 gezeigten Ausführungsbeispiel. Sie ist in endlicher Entfernung zu dem Multi-Kamera Modul 2 angeordnet. Die Abbildung des ersten Kollimators 12a in Richtung des Multi-Kamera Moduls 2 erfolgt mithilfe eines Umlenkspiegels 34, welcher insbesondere transparent ist. Ferner umfasst die Vorrichtung 10 eine Verarbeitungseinheit 30, bei der es sich beispielsweise um einen PC handelt. Auch die in Fig. 9 gezeigte Vorrichtung ist dazu geeignet, eine Teststruktur in endlicher und eine Teststruktur in unendlicher Entfernung zu erzeugen, welche gleichzeitig mit den beiden Kameras 4a, 4b des Multi-Kamera Moduls 2 erfasst werden. Anschließend wird eine Ausrichtung der einzelnen Kameras 4a, 4b des Multi-Kamera Moduls 2 relativ zueinander vorgenommen, so wie es zuvor beschrieben wurde.

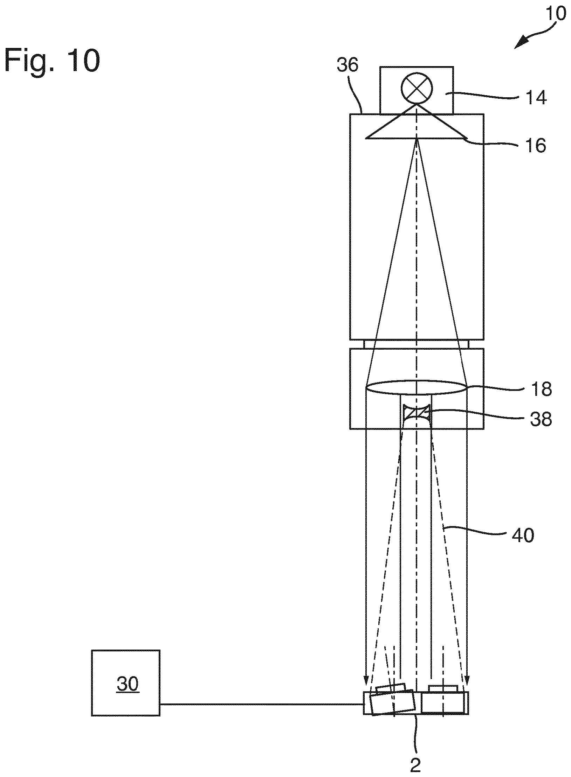

Fig. 10 zeigt eine weitere Vorrichtung 10 zum Justieren und/oder Kalibrieren eines Multi-Kamera Moduls 2 gemäß einem Ausführungsbeispiel. Die Vorrichtung 10 umfasst einen bifokalen Kollimator 36, welcher gleichzeitig die Funktion eines Endlich-Kollimators und die eines Unendlich-Kollimators bereitstellt. Der bifokale Kollimator 36 umfasst eine Strichplatte 16, die mithilfe der Linse 18 in unendliche Entfernung abgebildet wird. Unterhalb der Linse 18 ist eine Negativlinse 38 angeordnet, die dafür sorgt, dass das zentral die Linse 18 durchtretende Lichtbündel eine Abbildung der Strichplatte 16 in endlicher Entfernung ergibt. Dieses ist das wie in gestrichelter Linie angedeutet dargestellte Lichtbündel 40, welches von der Negativlinse 38 ausgeht. Bei dem Ausführungsbeispiel kommt also eine bifokale Kollimatorlinse zum Einsatz, welche aus der Linse 18 und der Negativlinse 38 aufgebaut ist. Diese bifokale Kollimatorlinse liefert sowohl kollimiertes Licht (ähnlich einem Unendlich-Kollimator) als auch divergentes Licht (ähnlich einem Endlich-Kollimator). Ein Beispiel dafür ist die gezeigte Kombination aus einer Positivlinse 18 zur Kollimation und einer nachgelagerten Negativlinse 38 zur Erzeugung von divergentem Licht. Wird die Negativlinse 38 so ausgelegt, dass ihr Durchmesser geringer ist als der Abstand der beiden Kameras 4a, 4b, so gelangt gleichzeitig kollimiertes wie auch divergentes Licht auf die Kameras 4a, 4b.

Die Vorrichtung 10 umfasst außerdem, so wie die übrigen Vorrichtungen, eine Verarbeitungseinheit 30, deren Funktion bereits hinlänglich erläutert wurde. Die Vorrichtung 10 gemäß dem in Fig. 10 dargestellten Ausführungsbeispiel zeichnet sich durch einen besonders kompakten Aufbau aus.

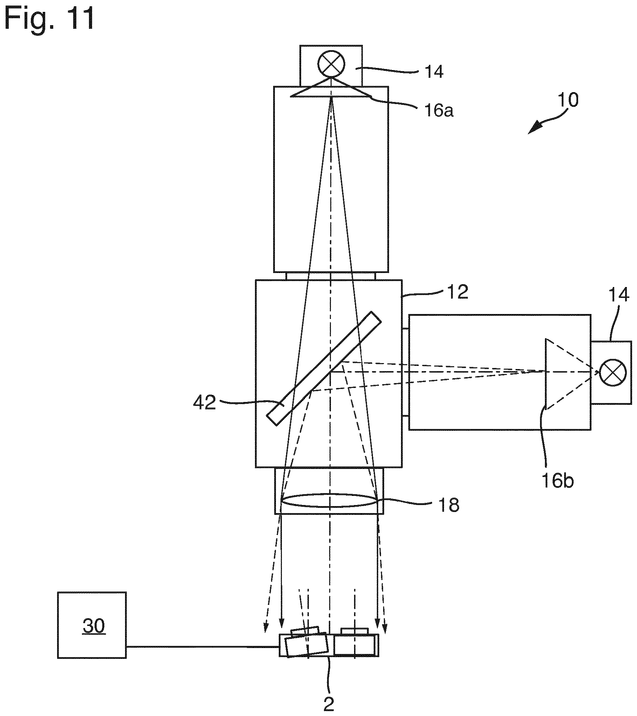

Fig. 11 zeigt eine weitere Vorrichtung 10 gemäß einem Ausführungsbeispiel. Die optische Anordnung umfasst einen Kollimator 12, wobei eine erste Strichplatte 16a und eine zweite Strichplatte 16b in unterschiedlicher Entfernung zu einem Fokus des Kollimators 12 angeordnet sind. Die erste Strichplatte 16a befindet sich zumindest näherungsweise im Fokus des Kollimators 12. Ihr Muster wird daher ins Unendliche abgebildet. Die zweite Strichplatte 16b ist hingegen aus dem Fokus des Kollimators 12 heraus verschoben und liegt geringfügig innerhalb der Brennweite der Linse 18. Ihr Muster wird daher in endlicher Entfernung abgebildet. Die beiden Abbildungen werden mithilfe eines Stahlteilers 42 zusammengeführt, so dass von dem Multi-Kamera Modul 2 erneut sowohl die erste als auch die zweite virtuelle Teststruktur 22, 26 erfasst werden. Die Vorrichtung 10, wie sie Fig. 11 zeigt, umfasst ferner eine bereits beschriebene Verarbeitungseinheit 30.

Bei allen zuvor genannten Ausführungsbeispielen ist ferner insbesondere vorgesehen, dass der erste Kollimator 12a zum Erzeugen der ersten virtuellen Teststrukturen 22 in unendlicher Entfernung als Autokollimator ausgebildet ist. Er ist dazu eingerichtet, das Multi-Kamera Modul 2 anhand von Referenzflächen des Multi-Kamera Moduls 2 auszurichten.

Die zuvor beschriebenen Vorrichtungen 10 werden insbesondere zum Justieren und/oder Kalibrieren eines Multi-Kamera Moduls 2 verwendet. Dies betrifft vorteilhaft alle Ausführungsbeispiele.

Justage und Kalibration können zusammen durchgeführt werden oder es wird nur einer der Vorgänge durchgeführt. Wird nur eine Kalibration vorgenommen, werden die zweiten Kameras nicht aktiv justiert, sondern die Abweichungen lediglich messtechnisch ermittelt. Die Daten können anschließend genutzt werden, um beispielsweise die zweiten Kamerabilder numerisch zu korrigieren. Dies kann vorteilhaft sein, wenn beispielsweise die Justage der einzelnen Kameras nicht getrennt voneinander möglich ist, beispielsweise wenn sowohl Objektive als auch Kamerasensoren auf jeweils einem separaten Wafer angeordnet sind.

Ferner ist abweichend von den Darstellungen in den Figuren eine Justage und Kalibrierung lediglich der abbildenden Optik 6a, 6b und/oder der nicht dargestellten Bildsensoren der Kameras 4a, 4b und nicht der ganzen Kameras 4a, 4b vorgesehen. Dies betrifft insbesondere Ausführungsbeispiele, bei denen wahlweise die abbildenden Optiken 6a, 6b oder die Bildsensoren baulich zusammengefasst sind. Beispielsweise sind diese fest miteinander verbunden oder in einem gemeinsamen Gehäuse ausgenommen. Betreffend die Bildsensoren ist in diesem Zusammenhang insbesondere vorgesehen, dass diese auf einer gemeinsamen Leiterplatte oder gar auf einem gemeinsamen Die angeordnet sind. Im Extremfall handelt es sich um einen großen Sensor, welcher mit zwei getrennten Abbildungsoptiken beleuchtet wird. Für die beschriebenen Vorrichtungen 10 ist lediglich beispielhaft die Justage eines Multi-Kamera Moduls 2 mit lediglich zwei Kameras 4a, 4b beschrieben worden. Die Vorrichtungen 10 sind ebenso zur Justage von Multi Kamera Modulen 2 mit mehr als zwei Kameras vorgesehen. Zur Justage eines solchen Moduls erfolgt statt eines Vergleichs eines ersten Einzelbildes 20a mit einem zweiten Referenz-Einzelbild 20b ein Vergleich mehrerer erster Einzelbilder unterschiedlicher Kameras mit dem Referenz-Einzelbild.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuqszeichenliste

- 2: Multi-Kamera Modul
- 4a: erste Kamera
- 4b: zweite Kamera
- 6a: erste abbildende Optik
- 6b: zweite abbildende Optik
- 8a: erste optische Achse
- 8b, 8b': zweite optische Achse
- 10: Vorrichtung zum Justieren und Kalibrieren
- 12: Kollimator
- 12a: erster Kollimator
- 12b, 12b', 12b": zweiter Kollimator
- 14: Beleuchtung
- 16: Strichplatte
- 16a: erste Strichplatte
- 16b: zweite Strichplatte
- 18a: erste Linse
- 18b: zweite Linse
- 20a: erstes Einzelbild
- 20b: zweites Einzelbild
- 22: erste virtuelle Teststruktur
- 24: virtuelles Kollimatorbild
- 26: zweite virtuelle Teststruktur
- 28: Kugelsphäre
- 30: Verarbeitungseinheit
- 32: reale Teststruktur
- 34: Umlenkspiegel
- 36: bifokaler Kollimator
- 38: Negativlinse
- 40: Lichtbündel/Grenzstrahlen der Negativlinse
- 42: Strahlteiler
- D: Abstand

## Patentansprüche

1. Vorrichtung (10) zum Justieren und/oder Kalibrieren eines Multi-Kamera Moduls (2) mit mehreren Kameras (4a, 4b), wobei die Vorrichtung (10) umfasst:
- eine optische Anordnung, die dazu eingerichtet ist, erste virtuelle Teststrukturen (22) in unendlicher Entfernung und zweite virtuelle Teststrukturen (26) in endlicher Entfernung gleichzeitig zu erzeugen, wobei die optische Anordnung einen einzigen Kollimator (12, 36) umfasst,
- wobei
a) der Kollimator (12, 36) ein bifokaler Kollimator (36) ist, der eine einzige Strichplatte (16) als erste virtuelle Teststrukturen (22) in unendlicher Entfernung abbildet und die Strichplatte (16) als zweite virtuelle Teststrukturen (26) in endlicher Entfernung abbildet
oder
b) eine erste Strichplatte (16a) und eine zweite Strichplatte (16b) in unterschiedlichen Entfernungen zu einem Fokus des Kollimators (12) angeordnet sind, so dass die ersten virtuellen Teststrukturen (22) und die zweiten virtuellen Teststrukturen (26) durch den Kollimator (12) erzeugbar sind,
- und wobei die ersten und die zweiten virtuellen Teststrukturen (22, 26) gleichzeitig mit den Kameras (4a, 4b) des Multi-Kamera Moduls (2) erfassbar sind,
- eine Verarbeitungseinheit (30) zum Auswerten einer mit dem Multi-Kamera Modul (2) erfassten Aufnahme der ersten und zweiten virtuellen Teststrukturen (22, 26), wobei die Verarbeitungseinheit (30) dazu eingerichtet ist, eine Ausrichtung der Kameras (4a, 4b) des Multi-Kamera Moduls (2) relativ zueinander aus der erfassten Aufnahme zu berechnen, wobei die mit dem Multi-Kamera Modul (2) erfasste Aufnahme ein Einzelbild (20a, 20b) pro Kamera (4a, 4b) umfasst, und wobei jedes Einzelbild (20a, 20b) die ersten und die zweiten virtuellen Teststrukturen (22, 26) abbildet und die Verarbeitungseinheit (30) ferner dazu eingerichtet ist, eine Ausrichtung der Kameras (4a, 4b) relativ zueinander zu berechnen, indem Positionen der Teststrukturen (22, 26) im Einzelbild (20a, 20b) einer Kamera (4a, 4b) mit Positionen der entsprechenden Teststrukturen (22, 26) im Einzelbild (20a, 20b) einer weiteren Kamera (4a, 4b) verglichen und Abweichungen berechnet werden,
- eine Justage- und/oder Kalibriereinheit, die dazu eingerichtet ist, auf der Grundlage von Daten betreffend die Ausrichtung der Kameras (4a, 4b) des Multi-Kamera Moduls (2) diese Kameras (4a, 4b) relativ zueinander auszurichten und so das Multi-Kamera Modul (2) zu justieren und/oder zu kalibrieren.

2. Vorrichtung (10) nach Anspruch 1, **dadurch gekennzeichnet, dass** die Verarbeitungseinheit (30) dazu eingerichtet ist, die Einzelbilder (20a, 20b) der Aufnahme gleichzeitig zu erfassen.

3. Vorrichtung (10) nach Anspruch 1 oder 2, **dadurch gekennzeichnet, dass** der Kollimator (12, 36) als Autokollimator ausgebildet ist, der dazu eingerichtet ist, das Multi-Kamera Modul (2) anhand von Referenzflächen des Multi-Kamera Moduls (2) auszurichten.

4. Verwendung einer Vorrichtung (10) nach einem der vorhergehenden Ansprüche zum Justieren und/oder Kalibrieren eines Multi-Kamera Moduls (2).

5. Verfahren zum Justieren und/oder Kalibrieren eines Multi-Kamera Moduls (2) mit mehreren Kameras (4a, 4b), die folgenden Schritte umfassend:
- gleichzeitiges Bereitstellen erster virtueller Teststrukturen (22) in unendlicher Entfernung und zweiter virtueller Teststrukturen (26) in endlicher Entfernung, wobei die ersten virtuellen Teststrukturen (22) in unendlicher Entfernung und die zweiten virtuellen Teststrukturen (26) in endlicher Entfernung durch eine optische Anordnung bereitgestellt werden, wobei die optische Anordnung einen einzigen Kollimator (12, 36) umfasst, und indem
a) ein bifokaler Kollimator (36) eine einzige Strichplatte (16) als erste virtuelle Teststrukturen (22) in unendlicher Entfernung und die Strichplatte (16) als zweite virtuelle Teststrukturen (26) in endlicher Entfernung abbildet,
oder
b) eine erste Strichplatte (16a) und eine zweite Strichplatte (16b) in unterschiedlichen Entfernungen zu einem Fokus des Kollimators (12) angeordnet werden, so dass die ersten virtuellen Teststrukturen (22) und die zweiten virtuellen Teststrukturen (26) durch den Kollimator (12) erzeugbar sind,
- gleichzeitiges Erfassen einer Aufnahme der ersten und der zweiten virtuellen Teststrukturen (22, 26) mit dem Multi-Kamera Modul (2), wobei mit dem Multi-Kamera Modul (2) eine Aufnahme erfasst wird, die ein Einzelbild (20a, 20b) pro Kamera (4a, 4b) umfasst, wobei jedes Einzelbild (20a, 20b) die ersten und die zweiten virtuellen Teststrukturen (22, 26) abbildet,
- Auswerten der erfassten Aufnahme, wobei eine Ausrichtung der Kameras (4a, 4b) des Multi-Kamera Moduls (2) relativ zueinander aus der erfassten Aufnahme berechnet wird, indem Positionen der Teststrukturen (22, 26) im Einzelbild (20a, 20b) einer Kamera (4a, 4b) mit Positionen der entsprechenden Teststrukturen (22, 26) im Einzelbild (20a, 20b) einer weiteren Kamera (4a, 4b) verglichen und Abweichungen berechnet werden,
- Justieren und/oder Kalibrieren der Kameras (4a, 4b) des Multi-Kamera Moduls (2) relativ zueinander auf der Grundlage von Daten betreffend die Ausrichtung der Kameras (4a, 4b) des Multi-Kamera Moduls (2).

6. Verfahren nach Anspruch 5, **dadurch gekennzeichnet, dass** die Einzelbilder (20a, 20b) der Aufnahme gleichzeitig erfasst werden.

7. Verfahren nach Anspruch 5 oder 6, **dadurch gekennzeichnet, dass** das Multi-Kamera Modul (2) anhand von Referenzflächen des Multi-Kamera Moduls (2) mit dem Kollimator (12), der als Autokollimator ausgebildet ist, ausgerichtet wird.

## Claims

1. An apparatus (10) for adjusting and/or calibrating a multi-camera module (2) having a plurality of cameras (4a, 4b), the apparatus (10) comprising:
- an optical arrangement, which is configured to simultaneously create first virtual test structures (22) at an infinite distance and second virtual test structures (26) at a finite distance, wherein the optical arrangement comprises one single collimator (12, 36),
- wherein
a) the collimator (12, 36) is a bifocal collimator (36), which images a single graticule (16) as the first virtual test structures (22) at an infinite distance and images the graticule (16) as second virtual test structures (26) at a finite distance
or
b) a first graticule (16a) and a second graticule (16b) are arranged at different distances from a focus of the collimator (12), in that the first virtual test structures (22) and the second virtual test structures (26) can be created by the collimator (12),
- and wherein the first and the second virtual test structures (22, 26) are simultaneously detectable with the cameras (4a, 4b) of the multi-camera module (2),
- a processing unit (30) for evaluating a picture of the first and second virtual test structures (22, 26) captured with the multi-camera module (2), wherein the processing unit (30) is configured to calculate an alignment of the cameras (4a, 4b) of the multi-camera module (2) relative to each other from the captured picture, wherein the picture captured with the multi-camera module (2) comprises an individual image (20a, 20b) per camera (4a, 4b), and wherein each individual image (20a, 20b) displays the first and the second test virtual structures (22, 26) and the processing unit (30) is further configured to calculate an alignment of the cameras (4a, 4b) relative to each other, in that positions of the test structures (22, 26) in the individual image (20a, 20b) of a camera (4a, 4b) are compared with positions of the corresponding test structures (22, 26) in the individual image (20a, 20b) of a further camera (4a, 4b) and deviations are calculated,
- an adjusting and/or calibrating unit, which is configured to align said cameras (4a, 4b) relative to each other based on data relating to the alignment of the cameras (4a, 4b) of the multi-camera module (2) and thereby adjusting and/or calibrating the multi-camera module (2).

2. The apparatus (10) according to claim 1, **characterized in that** the processing unit (30) is configured to capture the individual images (20a, 20b) of the picture simultaneously.

3. The apparatus (10) according to claim 1 or 2, **characterized in that** the collimator (12, 36) is designed as an auto-collimator, which is configured to align the multi-camera module (2) using reference surfaces of the multi-camera module (2).

4. A use of an apparatus (10) according to one of the previous claims for adjusting and/or calibrating a multi-camera module (2).

5. A method for adjusting and/or calibrating a multi-camera module (2) having a plurality of cameras (4a, 4b), the method comprising the following steps:
- Simultaneously providing first virtual test structures (22) at an infinite distance and second virtual test structures (26) at a finite distance, wherein the first virtual test structures (22) are provided at an infinite distance and the second virtual test structures (26) are provided at a finite distance by an optical arrangement, wherein the optical arrangement comprises a single collimator (12, 36), and in that
a) a bifocal collimator (36) images a single graticule (16) as first virtual test structures (22) at an infinite distance and images the graticule (16) as second virtual test structures (26) at a finite distance,
or
b) a first graticule (16a) and a second graticule (16b) are arranged at different distances from a focus of the collimator (12), in that the first virtual test structures (22) and the second virtual test structures (26) can be created by the collimator (22),
- Simultaneously capturing a picture of the first and the second virtual test structures (22, 26) with the multi-camera module (2), wherein a picture is captured with the multi-camera module (2), said picture comprising an individual image (20a, 20b) per camera (4a, 4b), and wherein each individual image (20a, 20b) displays the first and the second virtual test structures (22, 26),
- Analyzing the captured picture, wherein an alignment of the cameras (4a, 4b) of the multi-camera module (2) relative to each other is calculated from the captured picture in that positions of the test structures (22, 26) in the individual image (20a, 20b) of a camera (4a, 4b) are compared with positions of the corresponding test structures (22, 26) in the individual image (20a, 20b) of another camera (4a, 4b) and deviations are calculated,
- Adjusting and/or calibrating the cameras (4a, 4b) of the multi-camera module (2) relative to each other based on data relative to the alignment of the cameras (4a, 4b) of the multi-camera module (2).

6. The method according to claim 5, **characterized in that** the individual images (20a, 20b) of the picture are captured simultaneously.

7. The method according to claim 5 or 6, **characterized in that** the multi-camera module (2) is aligned based on reference surfaces of the multi-camera module (2) with the collimator (12), which is designed as an auto-collimator.

## Revendications

1. Dispositif (10) pour ajuster et/ou étalonner un module multi-caméras (2) ayant une pluralité de caméras (4a, 4b), le dispositif (10) comprenant :
- un agencement optique adapté pour générer simultanément des premières structures de test virtuelles (22) à une distance infinie et des deuxièmes structures de test virtuelles (26) à une distance finie, ledit agencement optique comprenant un collimateur (12, 36) unique,
- dans lequel
a) le collimateur (12, 36) est un collimateur bifocal (36) qui représente un réticule (16) unique en tant que les premières structures de test virtuelles (22) à une distance infinie et qui représente le réticule (16) en tant que les deuxièmes structures de test virtuelles (26) à une distance finie,
ou
b) un premier réticule (16a) et un deuxième réticule (16b) sont disposés à des distances différentes d'un foyer du collimateur (12) de sorte que les premières structures de test virtuelles (22) et les deuxièmes structures de test virtuelles (26) sont aptes à être générées par le collimateur (12),
- et dans lequel les premières et deuxièmes structures de test virtuelles (22, 26) sont aptes à être détectées simultanément avec les caméras (4a, 4b) du module multi-caméras (2),
- une unité de traitement (30) pour évaluer une image des premières et deuxièmes structures de test virtuelles (22, 26) capturée avec le module multi-caméras (2), l'unité de traitement (30) étant adaptée pour calculer un alignement des caméras (4a, 4b) du module multi-caméras (2) les unes par rapport aux autres à partir de l'image capturée, l'image capturée avec le module multi-caméras (2) comprenant une image (20a, 20b) par caméra (4a, 4b), et chaque image (20a, 20b) représentant les premières et deuxièmes structures de test virtuelles (22, 26), et l'unité de traitement (30) étant en outre configurée pour calculer un alignement des caméras (4a, 4b) les unes par rapport aux autres en comparant les positions des structures de test (22, 26) dans l'image unique (20a, 20b) d'une caméra (4a, 4b) avec les positions des structures de test correspondantes (22, 26) dans l'image unique (20a, 20b) d'une autre caméra (4a, 4b) et en calculant les écarts,
- une unité de réglage et/ou d'étalonnage agencée pour aligner lesdites caméras (4a, 4b) dudit module multi-caméras (2) les unes par rapport aux autres à partir de données relatives à l'alignement desdites caméras (4a, 4b) dudit module multi-caméras (2), ce qui permet de régler et/ou d'étalonner ledit module multi-caméras (2).

2. Dispositif (10) selon la revendication 1, **caractérisé en ce que** l'unité de traitement (30) est agencée pour capturer simultanément les images individuelles (20a, 20b) de l'enregistrement.

3. Dispositif (10) selon la revendication 1 ou la revendication 2, **caractérisé en ce que** le collimateur (12, 36) est sous la forme d'un auto-collimateur qui est adapté pour aligner le module multi-caméras (2) avec les surfaces de référence du module multi-caméras (2).

4. Utilisation d'un dispositif (10) selon l'une des revendications précédentes pour le réglage et/ou l'étalonnage d'un module multi-caméras (2).

5. Procédé de réglage et/ou d'étalonnage d'un module multi-caméras (2) avec plusieurs caméras (4a, 4b), comprenant les étapes suivantes :
- prévoir simultanément des premières structures de test virtuelles (22) à distance infinie et des deuxièmes structures de test virtuelles (26) à distance finie, lesdites premières structures de test virtuelles (22) à distance infinie et lesdites deuxièmes structures de test virtuelles (26) à distance finie étant fournies par un agencement optique, ledit agencement optique comprenant un collimateur (12, 36) unique, et
a) un collimateur bifocal (36) représente un réticule (16) unique en tant que premières structures de test virtuelles (22) à une distance infinie et le réticule (16) en tant que deuxièmes structures de test virtuelles (26) à une distance finie,
ou
b) un premier réticule (16a) et un deuxième réticule (16b) sont disposés à des distances différentes d'un foyer du collimateur (12) de sorte que les premières structures de test virtuelles (22) et les deuxièmes structures de test virtuelles (26) sont aptes à être générées par le collimateur (12),
- capturer simultanément une image de la première et de la deuxièmes structures de test virtuelles (22, 26) avec le module multi-caméras (2), une image étant capturée avec le module multi-caméras (2), laquelle image comprend une seule image (20a, 20b) par caméra (4a, 4b), chaque image individuelle (20a, 20b) représentant les premières et deuxièmes structures de test virtuelles (22, 26),
- évaluer l'image enregistrée, un alignement des caméras (4a, 4b) du module multi-caméras (2) les unes par rapport aux autres étant calculé à partir de l'image enregistrée en comparant les positions des structures de test (22, 26) dans l'image unique (20a, 20b) d'une caméra (4a, 4b) avec les positions des structures de test correspondantes (22, 26) dans l'image unique (20a, 20b) d'une autre caméra (4a, 4b) et en calculant les écarts,
- ajuster et/ou étalonner les caméras (4a, 4b) du module multi-caméras (2) les unes par rapport aux autres à partir de données relatives à l'alignement des caméras (4a, 4b) du module multi-caméras (2).

6. Procédé selon la revendication 5, **caractérisé en ce que** les images individuelles (20a, 20b) de l'enregistrement sont capturées simultanément.

7. Procédé selon la revendication 5 ou la revendication 6, **caractérisé en ce que** le module multi-caméras (2) est aligné avec le collimateur (12), qui est sous la forme d'un auto-collimateur, au moyen de surfaces de référence du module multi-caméras (2).
